# EUROPÄISCHE PATENTSCHRIFT

(11) **EP 1 925 392 B1**
(45) Veröffentlichungstag und Bekanntmachung des Hinweises auf die Patenterteilung: **02.02.2011**
(21) Anmeldenummer: 07022681.6
(22) Anmeldetag: 22.11.2007
(51) Int. Cl.: B23K 37/04, B25B 5/14, B23Q 3/06

(54) **Vorrichtung und Verfahren für Reparaturen einer Aussenhaut**
Device and method for repairing an exterior shell
Dispositif et procédé destinés à la réparation d'un revêtement

(30) Priorität: 24.11.2006 DE 102006055607
(43) Veröffentlichungstag der Anmeldung: 28.05.2008
(73) Patentinhaber: Kammerhofer Gert GmbH, 86687 Kaisheim (DE)
(72) Erfinder: Kammerhofer, Gert, 86687 Kaisheim (DE); Riel, Andreas, 86641 Rain (DE)
(74) Vertreter: DTS München

(56) Entgegenhaltungen:
- EP-A- 0 970 764
- DE-A1- 4 034 625
- JP-A- 58 174 079

## Beschreibung

Die vorliegende Erfindung bezieht auf eine Vorrichtung für Reparaturen an einer Außenhaut gemäß dem Oberbegriff des Anspruchs 1, insbesondere bezieht sich die Erfindung auf eine Vorrichtung zur Reparatur einer Außenhaut an Schienenfahrzeugen. Die Erfindung betrifft ebenfalls ein Verfahren für Reparaturen an einer Aussenhaut unter Verwendung der Erfindungsgemässen Vorrichtung.

Im Stand der Technik gibt es unterschiedliche Möglichkeiten Bleche bei Schienenfahrzeugen zu reparieren, wobei Abstützungen und Verspannungen direkt im Schienenfahrzeug vorgenommen werden. Dabei werden lange Zug- und Druckstangen in den Wagenkasten eingebracht, um durch Kreuz- und Querverspannungen den Wagenkasten in Form zu halten. Die Spannungen werden dabei mittels gegenläufiger Gewinde erzeugt, die in den Stangen vorhanden sind. Darüber hinaus werden Winkel und Halter befestigt, um in der Nähe der Reparaturstelle Stabilität zu schaffen. Allerdings tritt bei derartigen Reparaturen häufig der Nachteil auf, dass Verziehungen oder Verwerfungen bei dem zu reparierenden Blech auftreten. DE-A-4 034 625 beschreibt eine Vorrichtung mit den Merkmalen des Oberbegriffes des Anspruchs 1.

Aufgabe der vorliegenden Erfindung ist es daher, eine sichere Fixierung für eine Reparaturvorrichtung zu schaffen, damit einerseits der herauszutrennende, beschädigte Teil der Außenhaut nicht den Gesamtverbund der Außenhaut verzieht oder versprengt, und andererseits nach Einbringen eines Ersatzteils und dessen Verschweißung keine Verwerfungen bei der Außenhaut erzeugt werden.

Diese Aufgabe wird durch eine Vorrichtung zur Reparatur einer Außenhaut, insbesondere eines Blechs, mit den Merkmalen des Anspruchs 1 gelöst.

Unter einer Vorrichtung zur Reparatur einer Außenhaut versteht man dabei bevorzugt ein geeignetes Hilfsmittel zum effektiven und kostengünstigen Durchführen einer Reparatur. Unter einer Außenhaut versteht man dabei jene Oberfläche eines Fahrzeuges bzw. Schienenfahrzeuges, die nach außen weist und den Innenbereich eines Fahrzeuges vor äußeren Umwelteinflüssen schützt. Die Außenhaut besteht dabei bevorzugt aus Blech, Aluminium, Kunststoff, Edelstahl, Teflon, etc.

Unter einem Außenrahmen versteht man dabei bevorzugt einen Rahmen, welcher bevorzugt eine rechteckige, kreisförmige oder sonstige Geometrie besitzt und darüber hinaus eine entsprechende Stabilität aufweist, um für Reparaturen an einer Außenhaut, insbesondere einem Blech eingesetzt zu werden. Ein derartiger Außenrahmen kann bevorzugt aus Stahl, Eisen, Aluminium oder einer sonstigen stabilen Metallverbindung bestehen. Der Außenrahmen ist dabei jener Teil der Vorrichtung, der auf die Außenseite des zu reparierenden Blechs des Schienenfahrzeugs aufgebracht wird, wobei sich die zu reparierende Stelle der Außenhaut bzw. des Blechs bevorzugt in der Mitte des Außenrahmens befindet.

Weiter ist es bevorzugt, dass der Außenrahmen die Außenkontur der Außenhaut abbildet. Dies ist bevorzugt dann der Fall, wenn die Kontur der Oberfläche der Außenhaut bereits der Kontur des Außenrahmens entspricht. Bevorzugt ist in diesem Fall die Verwendung eines zusätzlichen Konturrahmens nicht notwendig.

Unter einem Innenrahmen versteht man einen Rahmen, welcher die gleiche oder eine ähnliche Geometrie wie der Außenrahmen 1 aufweist. Auch der Innenrahmen ist bevorzugt aus dem gleichen Material hergestellt, wobei dies allerdings nicht notwendigerweise der Fall sein muss. Der Innenrahmen wird auf die Innenseite der Außenhaut bzw. des zu reparierenden Blechs aufgebracht, wobei sich die zu reparierende Stelle des Blechs bevorzugt in der Mitte des Rahmens befindet. Als Innenseite der Außenhaut bzw. des Blechs wird dabei bevorzugt jene Seite verstanden, welche in das Innere des Schienenfahrzeuges weist. Weiter ist es bevorzugt, dass der Innenrahmen die Innenkontur der Innenseite der Außenhaut abbildet. Dies ist bevorzugt dann der Fall, wenn die Kontur der Oberfläche der Innenseite bereits der Kontur des Innenrahmens entspricht. Bevorzugt ist in diesem Fall die Verwendung eines zusätzlichen Konturrahmens nicht notwendig.
Darüber hinaus ist es bevorzugt, dass der Außenrahmen und er Innenrahmen derart dimensioniert sind, um bei der Reparatur auftretende Verspannungskräfte der Außenhaut bzw. des Blechs zu kompensieren, damit eine verzugsfreie bzw. spannungsfreie Montage und Befestigung des Ersatzteils vorgenommen werden kann. Darüber hinaus ist es bevorzugt, dass die Geometrie des Außen- und Innenrahmens derart dimensioniert ist, dass mittels einer entsprechenden Reparaturvorrichtung, bevorzugt einer Schweißvorrichtung, die zu reparierende Stelle leicht zugänglich ist.

Unter einem Element zum Verbinden des Außenrahmens mit dem Innenrahmen versteht man eine Vorrichtung, bevorzugt eine Schraube oder ein sonstiges Verbindungsmittel, wie z.B. ein Bolzen, welches bevorzugt an dem Außenrahmen oder Innenrahmen fest angebracht ist und mit dem Innenrahmen oder Außenrahmen in Verbindung gebracht wird. Bevorzugt wird die Verbindung mittels einer Schraube bewerkstelligt, wobei die Schraube durch eine Bohrung der Außenhaut bzw. des Blechs und des Innenrahmens bzw. Außenrahmens verläuft. An dem Ende des Elements zum Verbinden kann bevorzugt ein Gewinde angebracht werden, um eine Schraubverbindung oder eine sonstige Verbindung mit dem Element herzustellen.

Bevorzugt versteht man darunter, dass die Außenhaut bzw. das Blech zwischen Außenrahmen und Innenrahmen spannungsfrei anordenbar ist, dass sich mittels des Verbindungsmittels eine derartig starke Kraft zwischen der eingeklemmten Außenhaut bzw. dem eingeklemmten Blech und dem Außenrahmen und dem Innenrahmen herstellen, dass es zu keiner Verwerfung bzw. Verspannung des zu reparierenden Blechs kommt.

Darüber hinaus ist es bevorzugt, dass die Vorrichtung ein zusätzliches Abstützen mittels Abstützvorrichtungen z.B. zum Fahrzeugboden, zu Seitenwänden, etc. erlaubt. Die Größe eines derartigen Bereichs zum Aufstützen ist bevorzugt variabel und erlaubt, die Aufnahme der Gesamtkraft, die sich aus der Kraft des Abstützens und der Kraft von eventuell auftretenden Verspannungen zusammensetzt.

Unter einem äußeren Grundrahmen versteht man jenen Teil des Außenrahmens, welcher am weitesten von der Außenseite der Außenhaut bzw. des Blechs beabstandet ist, und an welchem Elemente zum Verbinden des Außenrahmens mit dem Innenrahmen angeordnet sind. Der Grundrahmen weist eine Vielzahl von Bohrungen auf, durch welche auch mindestens ein Element zum Verbinden des Außenrahmens mit dem Innenrahmen verläuft. Bevorzugt sind die Elemente zum Verbinden des Außenrahmens mit dem Innenrahmen bei einer rechteckigen Form des Außenrahmens in den jeweiligen Ecken des Rechtecks angeordnet.

Unter einem äußeren Konturrahmen versteht man jenen Teil des Außenrahmens, welcher am nächsten zur Außenseite der Außenhaut bzw. des Blechs des Schienenfahrzeugs angeordnet ist. Bevorzugt weist der äußere Konturrahmen eine Vielzahl von Führungselementen 1e auf. Darüber hinaus weist der Konturrahmen eine Vielzahl von Bohrungen zum Durchführen des Verbindungselements auf. Diese Bohrungen sind bevorzugt bei einer rechteckigen Form an den Ecken des Rechtecks angeordnet. Darüber hinaus weist der Konturrahmen eine Kontur auf, welche dem Innendurchmesser des äußeren Grundrahmens entspricht. Der Konturrahmen ist konturkonform zur Geometrie der Außenhaut bzw. des Blechs, d.h. die Geometrie des Kontorrahmens passt sich bevorzugt der Geometrie der Außenhaut bzw. des Blechs an. Bevorzugt wird der äußere Konturrahmen aus einer Kopie hergestellt, die aus einem Abdruck der Oberfläche des Blechs stammt. Somit weist die Oberflächengeometrie des äußeren Konturrahmens die gleiche Oberflächengeometrie wie die Außenhaut bzw. das Blech auf.

Gemäß der vorliegenden Erfindung weisen der Außenrahmen und Innenrahmen eine Vielzahl von Bohrungen auf. Die Bohrungen sind dabei bevorzugt gleichförmig entlang der Oberfläche angeordnet, die senkrecht zu der Oberfläche des zu reparierenden Blechs verläuft. Bevorzugt verlaufen die Bohrungen vollständig durch den Außenrahmen und den Innenrahmen, so dass mindestens ein Element zum Verbinden des Innenrahmens und des Außenrahmens hindurchgeführt werden kann, und damit entsprechende Führungselemente zum sicheren Verbinden des Innenrahmens mit dem Außenrahmen angeordnet werden können. Durch die Vielzahl der Bohrungen und der Anordnung der Führungselemente bzw. Verbindungselemente ergibt sich der Vorteil, dass der Außenrahmen und der Innenrahmen fest und stabil auf der Außenhaut bzw. dem Blech angeordnet werden können.

Gemäß der vorliegenden Erfindung weist der Grundrahmen einen inneren Grundrahmen und einen inneren Konturrahmen auf. Der innere Grundrahmen ist dabei jener Teil des Innenrahmens , welcher am weitesten von der Oberfläche der Außenhaut bzw. des Blechs beabstandet ist.

Der innere Konturrahmen ist dabei jener Teil des Innenrahmens, welcher am nächsten zu der Innenseite des Blechs angeordnet ist. Der innere Grundrahmen und der innere Konturrahmen weisen eine Vielzahl von Bohrungen auf. Darüber hinaus ist es bevorzugt, dass der innere Konturrahmen eine Oberflächengeometrie aufweist, die der Geometrie des zu reparierenden Blechs bzw. der Außenhaut entspricht. Bevorzugt wird der innere Konturrahmen aus einer Kopie hergestellt, die aus einem Abdruck der inneren Oberfläche des Blechs stammt. Somit weist die Oberflächengeometrie des inneren Konturrahmens die gleiche Oberflächengeometrie wie die Außenhaut bzw. das Blech auf.

Gemäß einem weiteren Aspekt der vorliegenden Erfindung ist es bevorzugt, dass der äußere Konturrahmen und/oder der innere Konturrahmen konturkonform zu einer Form eines Blechs bzw. einer Außenhaut sind. Unter konturkonform zu einer Form der Außenhaut bzw. eines Blechs versteht man, dass der äußere Konturrahmen und der innere Konturrahmen eine Geometrie bzw. Oberflächengeometrie aufweisen, die zu der Geometrie bzw. Oberflächengeometrie der äußeren Seite des Blechs bzw. der inneren Seite der Außenhaut bzw. des Blechs vergleichbar bzw. ähnlich sind. Durch die konturkonforme Eigenschaft des Konturrahmens ergibt sich der Vorteil, dass der Konturrahmen optimal an das zu reparierende Blech angepasst werden kann.

Gemäß einem weiteren Aspekt der vorliegenden Erfindung ist es bevorzugt, dass sich der innere Konturrahmen aus mindestens einem Konturteil zusammensetzt. Bevorzugt setzt sich der innere Konturrahmen aus einer Vielzahl einzelner Konturteile zusammen. Bevorzugt besteht der innere Konturrahmen aus vier Konturteilen . Durch die einzelnen Konturteile ergibt sich der Vorteil, dass der Innenrahmen an die entsprechende Geometrie der Innenseite der Außenhaut bzw. des Blechs angepasst werden kann. Darüber hinaus ergibt sich der Vorteil, dass Verstärkungselemente bzw. Führungen entlang der Innenseite der Außenhaut bzw. des Blechs durch den Innenrahmen abgedeckt werden können. Dadurch ergibt sich weiter bevorzugt der Vorteil, dass die Oberfläche des Innenrahmens bzw. des inneren Konturrahmens entsprechend an der Innenseite des Blechs anliegt.

Gemäß einem weiteren Aspekt der vorliegenden Erfindung ist es bevorzugt, dass der innere Konturrahmen mindestens eine Ausnehmung zum Aufnehmen eines Verstärkungselements aufweist. Unter einer Ausnehmung versteht dabei eine entsprechende Formgebung, insbesondere eine Vertiefung auf der Oberfläche des inneren Konturrahmens . Durch diese Ausnehmung wird somit einem Verstärkungselement die Möglichkeit gegeben, bei einem Anbringen des inneren Konturrahmens auf die innere Oberfläche der Außenhaut bzw. des Blechs optimal in die Oberfläche des inneren Konturrahmens aufgenommen zu werden. Somit ist es möglich, dass der innere Konturrahmen optimal auf der Oberfläche der Innenseite der Außenhaut bzw. des Blechs aufliegt.

Gemäß einem weiteren Aspekt der vorliegenden Erfindung ist es bevorzugt, dass das Verbindungselement mindestens eine Schraube und mindestens eine Schraubenmutter umfasst. Unter einer Schraube bzw. einer Schraubenmutter versteht man dabei ein Verbindungselement, welches bevorzugt aus Stahl bzw. Edelstahl hergestellt ist und zur Verbindung des Außenrahmens mit dem Innenrahmen dient. Dabei weist die Schraube ein entsprechendes Gewinde auf, welches dem Gewinde der Schraubenmutter entspricht. Somit ist es möglich, mittels einer einfachen und kostengünstigen Weise den Außenrahmen mit dem Innenrahmen zu verbinden.

Gemäß einem weiteren Aspekt der vorliegenden Erfindung ist bevorzugt, dass der innere Grundrahmen und/oder der äußere Konturrahmen mindestens ein Führungselement , aufweisen. Unter einem Führungselement versteht man dabei ein Element, um zwischen dem äußeren Grundrahmen und dem inneren Konturrahmen eine entsprechende verschiebungsfreie Verbindung auf kostengünstige und einfache Weise herstellen zu können. Die Führungselemente werden dabei bevorzugt in die vorhergehend beschriebenen Bohrungen des äußeren Grundrahmens bzw. des inneren Konturrahmens eingefügt.

Die Aufgabe der vorliegenden Erfindung wird auch durch ein Verfahren zum Reparieren einer Außenhaut, insbesondere eines Blechs, mittels der erfindungsgemäßen Vorrichtung gelöst, wobei das Verfahren die Schritte des Anspruchs 7 enthält. Außenrahmens und des Innenrahmens mittels des mindestens einem Verbindungselement umfasst.

Unter dem Schritt eines Anbringens des Außenrahmens an einer Außenseite der Außenhaut bzw. des Blechs versteht man, dass der Außenrahmen an der äußeren Seite der Außenhaut bzw. des Blechs des Schienenfahrzeuges derart angebracht wird, dass sich der zu reparierende Schnitt auf der Außenhaut bzw. dem Blech in dem inneren Bereich des Außenrahmens, bevorzugt zentriert in dem inneren Bereich des Außenrahmens, befindet. Darüber hinaus wird der Außenrahmen derart auf die Oberfläche des Blechs aufgebracht, dass der Außenrahmen in unmittelbarem Kontakt mit der Außenhaut bzw. dem Blech steht.

Unter dem Schritt eines Anbringens des Innenrahmens an einer Innenseite der Außenhaut bzw. des Blechs versteht man, dass die Oberfläche des Innenrahmens unmittelbar an die Innenseite der Außenhaut bzw. des Blechs angrenzt. Darüber hinaus wird der Innenrahmen bevorzugt an der Ecke der Außenhaut bzw. des Blechs angebracht, die dem Außenrahmen direkt gegenüberliegt.

Unter dem Schritt eines Durchbohrens der Außenhaut bzw. des Blechs an mindestens einer Bohrung des Außenrahmens versteht man, dass die Außenhaut bzw. das Blech bevorzugt dort mittels einer entsprechenden Vorrichtung durchbohrt wird, wo eine Bohrung auf der Außenhaut bzw. dem Blech aufliegt. Bevorzugt werden mehrere Bohrungen durchgeführt, besonders bevorzugt werden vier Bohrungen durchgeführt, bevorzugt jeweils in den Ecken des rechteckigen äußeren Rahmens. Durch die Bohrungen ist es möglich, in einem späteren Schritt die entsprechenden Verbindungselemente durch die Bohrung des Außenrahmens und die Bohrung des Innenrahmens zu führen und somit den Innenrahmen mit dem Außenrahmen entsprechend verbinden zu können.

Unter dem Schritt eines Verbindens des Außenrahmens und des Innenrahmens mittels des mindestens einen Verbindungselements versteht man, dass, wie vorhergehend bereits erläutert wurde, ein entsprechendes Verbindungselement durch eine Bohrung des Außenrahmens und durch eine Bohrung des Innenrahmens geführt wird, so dass es zu einer entsprechenden Verbindung zwischen dem Innenrahmen und dem Außenrahmen kommt. Bevorzugt werden mindestens vier derartige Verbindungselemente durch jeweils entsprechende vier Bohrungen geführt und miteinander verbunden.

Gemäß einem weiteren Aspekt der vorliegenden Erfindung ist es bevorzugt, dass das Verfahren weiter den Schritt eines Anbringens eines Verstärkungselements in einem Randbereich der Vorrichtung umfasst. Unter dem Schritt eines Anbringens eines Verstärkungselements in einem Randbereich der Vorrichtung versteht man insbesondere, dass die Vorrichtung derart an dem Verstärkungselement angebracht wird, um für eine zusätzliche Stabilität der Vorrichtung bei der Anbringung auf dem Blech zu sorgen.

Gemäß einem weiteren Aspekt der vorliegenden Erfindung ist es bevorzugt, dass das Verfahren weiter den Schritt eines Anbringens des inneren Konturrahmens über einer Führung umfasst. Unter einer Führung versteht man dabei einen Abschnitt auf der Außenhaut bzw. dem Blech, welcher eine entsprechende Geometrie bzw. ein entsprechendes Profil aufweist, und wobei durch das Anbringen des inneren Konturrahmens, welcher bevorzugt eine Ausnehmung aufweist, über der Führung eine zusätzliche Stabilität der Vorrichtung auf dem zu reparierenden Blech erzielt werden kann.

Gemäß einem weiteren Aspekt der vorliegenden Erfindung ist es bevorzugt, dass das Verfahren weiter den Schritt eines Ausschneidens eines Teils der Außenhaut bzw. des Blechs , welcher durch die Vorrichtung 10 umgeben wird, und eines Ersetzens des Teils mittels eines Ersatzteils und eines Befestigens des Ersatzteils auf der Außenhaut bzw. dem Blech umfasst.

Unter dem Schritt eines Ausschneidens eines Teils 30 des Blechs , welcher durch die Vorrichtung umgeben wird, versteht man, dass jener Teil des Blechs ausgeschnitten wird, welcher eine entsprechende Reparatur benötigt. Bevorzugt liegt der Mittelpunkt des auszuschneidenden Teils in der Mitte des Außenrahmens bzw. Innenrahmens.

Unter dem Schritt eines Ersetzens des Teils 30 mittels eines Ersatzteils versteht man, dass in die Lücke, die durch das Ausschneiden des Teils aus dem Blech entstand, wieder ein entsprechender Ersatzteil eingefügt wird. Ein derartiger Ersatzteil, besteht bevorzugt aus dem gleichen Material wie das zu reparierende Blech. Dabei kann der Ersatzteil eine beliebige Form aufweisen.

Unter dem Schritt eines Befestigens des Ersatzteils aus dem Blech versteht man, dass der Ersatzteil auf der Außenhaut bzw. dem Blech entsprechend angebracht wird. Bevorzugt ist das Befestigen ein Befestigen mittels eines Schweißverfahrens.

Gemäß einem weiteren Aspekt der vorliegenden Erfindung ist es bevorzugt, dass das Ausschneiden des Teils mittels eines Vorgangs erfolgt, der aus der Gruppe stammt, die ein Laserschneiden, ein Blechschneiden, ein Sägen, ein Flexen, ein Stanzen oder eine Kombination davon umfasst.

Unter einem Laserschneiden versteht man dabei ein Verfahren, welches mittels eines entsprechenden Lasers auf dem zu reparierenden Blech aufgebracht wird. Unter einem Blechschneiden versteht man, dass das Blech mittels einer geeigneten Vorrichtung zum Schneiden von Blech, bevorzugt einer entsprechenden Schere, ausgeschnitten wird. Ein Sägen erfolgt bevorzugt mittels einer Säge, bevorzugt motorisch oder von Hand. Ein Flexen wird mittels einer motorischen Flex-Maschine ausgeführt. Unter einem Stanzen versteht man, dass die Außenhaut bzw. das Blech, bzw. der Teil des Blechs , mittels einer entsprechenden Stanzvorrichtung aus dem Blech herausgestanzt bzw. herausgeschnitten wird.

Gemäß einem weiteren Aspekt der vorliegenden Erfindung ist es bevorzugt, dass das Befestigen des Ersatzteils auf dem Blech mittels eines Vorgangs erfolgt, der aus der Gruppe stammt, die ein Schweißen, ein Kleben, ein Pressen, ein Stanzen, ein Verschrauben oder eine Kombination davon umfasst.

Unter einem Schweißen versteht man dabei einen Schweißvorgang, wie er im Stand der Technik üblich ist, um entsprechende Blechteile auf einem Blech anzuschweißen bzw. anzubringen.

Unter einem Kleben versteht man einen Vorgang, welcher entsprechende Kleber aus Kunststoff oder anderen Verbindungen umfasst, um Metallteile aufeinander zu kleben.

Unter einem Pressen versteht man dabei, dass die beiden Metallteile, also das eigentliche Blech und der Ersatzteil des Blechs, derart miteinander verpresst werden, dass der Ersatzteil auf dem Blech entsprechend hält.

Unter einem Stanzen versteht man dabei, dass der Ersatzteil mit dem Blech derart verformt wird, dass der Ersatzteil und das Blech in einer festen Verbindung miteinander stehen.

Unter einem Verschrauben versteht man, dass der Ersatzteil 40 eine entsprechende Geometrie aufweist, um mit dem Blech 20 verschraubt zu werden. Dabei weisen sowohl der Ersatzteil 40 als auch das Blech ein entsprechendes Gewinde auf.

Gemäß einem weiteren Aspekt der vorliegenden Erfindung ist es bevorzugt, dass die Außenhaut in ein Fahrzeug, insbesondere ein Schienenfahrzeug, ein Schiff, ein Flugzeug, ein Landfahrzeug oder ein Raumfahrzeug, eingebaut ist. Unter den vorhergenannten Fortbewegungsmitteln versteht man dabei Vorrichtungen, wie sie im Stand der Technik bekannt sind und für bei welchen entsprechende Reparaturen mittels der erfindungsgemäßen Vorrichtung bzw. dem erfindungsgemäßen Verfahren vorgenommen werden können.

Bevorzugte Ausführungsformen der Erfindung werden nachfolgend anhand der beigefügten Zeichnung näher erläutert.
Die **Figur 1** zeigt eine Explosionsdarstellung der erfindungsgemäßen Vorrichtung.
Die **Figuren 2a bis 2c** zeigen die Anbringung der erfindungsgemäßen Vorrichtung auf einem Blech in einer Draufsicht und einer Seitenansicht.
Die **Figuren 3a bis 3c** zeigen eine weitere Ausführungsform der erfindungsgemäßen Vorrichtung mit einem Verstärkungselement.
Die **Figur 4** zeigt eine Explosionszeichnung mit einzelnen Konturteilen des inneren Konturrahmens.

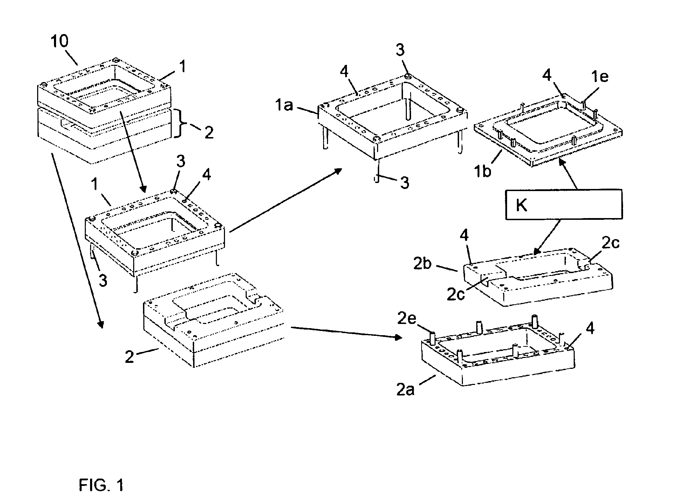

In **Figur 1** ist eine schematische Explosionszeichnung der erfindungsgemäßen Vorrichtung 10 dargestellt. Die Vorrichtung 10 setzt sich dabei aus einem Außenrahmen 1 und einem Innenrahmen 2 zusammen. Der Außenrahmen 1 wird aus einem äußeren Grundrahmen 1a und einem äußeren Konturrahmen 1b gebildet.

Der äußere Grundrahmen 1a weist eine Vielzahl von durchgehenden Bohrungen 4 und eine rechteckige Rahmenform auf. Durch vier dieser Bohrungen 4 verlaufen Verbindungselemente 3. An der Unterseite des äußeren Grundrahmens wird der äußere Konturrahmen angebracht. Dieser äußere Konturrahmen ist ebenfalls rechteckig geformt und weist Bohrungen und Führungselemente 1e auf. Darüber hinaus ist auf dem äußeren Konturrahmen eine entsprechende Oberflächengeometrie erkennbar, die konturkonform zur Oberfläche des Blechs 20 ist.

Der Innenrahmen 2 setzt sich aus dem inneren Grundrahmen 2a und dem inneren Konturrahmen 2b zusammen. Der innere Grundrahmen 2a weist ebenso eine Vielzahl von Bohrungen 4 und Führungselementen 2e auf. Ebenso weist der innere Konturrahmen 2b in dieser Ausführungsform eine Vielzahl von Bohrungen 4 und zwei Ausnehmungen 2c auf, wobei die Ausnehmungen dazu dienen, dass die Vorrichtung 10 über ein Verstärkungselement 5 gesetzt werden kann. Weiter weisen der innere und äußere Konturrahmen jeweils einen Konturbereich K auf, der konform zur Oberflächengeometrie der Innenseite und Außenseite der Außenhaut ist. Somit ist es möglich die Vorrichtung 10 optimal, konturkonform auf der Außenhaut bzw. dem Blech 20 aufzulegen.

Bei einem Zusammensetzen der einzelnen Komponenten der Vorrichtung 10, also des äußeren Grundrahmens 1a mit dem äußeren Konturrahmen 1b und dem inneren Konturrahmen 2b und inneren Grundrahmen 2a lässt sich aus Fig. 1 entnehmen, dass die in den Ecken des äußeren Grundrahmens angeordneten Verbindungselemente 3 durch die in den Ecken des äußeren Konturrahmens 1b, des inneren Konturrahmens 2b und des inneren Grundrahmens 2a angeordneten Bohrungen 4 verlaufen. An der Unterseite des inneren Grundrahmens (nicht dargestellt) verläuft das Verbindungselement, wenn es vollständig in die Bohrungen des äußeren Konturrahmens, inneren Konturrahmens und inneren Grundrahmens eingeschoben wird.

Weiter verlaufen die Führungen 1e in entsprechende Bohrungen des äußeren Grundrahmens, die sich seitlich der Bohrungen 4 für die Verbindungselemente 3 befinden. Ebenso verlaufen die Führungselemente 2e in den inneren Konturrahmen 2b seitlich der Bohrungen für die Verbindungselemente 3.

Somit ergibt sich nach dem Zusammensetzen der einzelnen Komponenten eine verschiebungsfeste Gesamtvorrichtung 10, welche in ihrer Gesamtheit eine spannungs- und verzerrungsfreie Vorrichtung auf der Außenhaut bzw. dem Blech ergibt. Der innere Konturrahmen und der äußere Konturrahmen drücken dabei im vorliegenden Fall fest an einander. Im Falle eines dazwischenliegenden Blechs wird das Blech durch den inneren Konturrahmen und äußeren Konturrahmen fest eingeklemmt.

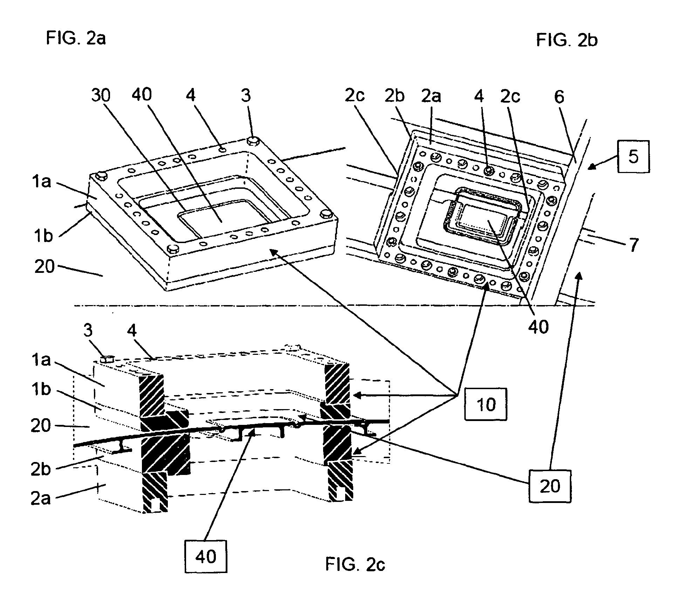

In **Figur 2a** ist eine Draufsicht auf die erfindungsgemäße Vorrichtung 10 dargestellt. Dabei ist der Außenrahmen 1, welcher sich aus dem äußeren Grundrahmen 1a und dem äußeren Konturrahmen 1b zusammensetzt mittels Schrauben 3 auf der äußeren Oberfläche des Blechs 20 aufgebracht. Darüber hinaus ist in der Figur 1a jener Teil des Blechs erkennbar, welcher nach dem Herausschneiden des beschädigten Teils 30 aus dem Blech 20 übrig geblieben ist. Weiter ist der Ersatzteil 40 erkennbar, welcher in die herausgeschnittene Öffnung in dem Blech 20 eingesetzt wurde.

Die **Figur 2b** stellt eine Ansicht auf die innere Oberfläche des Blechs 20 des Schienenfahrzeuges dar. Dabei ist der Innenrahmen 2, welcher sich aus dem inneren Konturrahmen 2b und dem inneren Grundrahmen 2a zusammensetzt an der inneren Oberfläche des Blechs angebracht geworden. Der innere Konturrahmen 2b ist dabei direkt an der Oberfläche des Blechs 20 angeordnet. Darüber hinaus weist der innere Konturrahmen 2b an seiner linken und rechten Seite Vertiefungen 2c auf, durch welche eine Führung 7, welche an der Innenseite des Blechs angeordnet ist, verläuft. Darüber hinaus ist erkennbar, dass die Vorrichtung 10 unmittelbar an ein Verstärkungselement 5 angrenzt. Durch dieses Angrenzen der Vorrichtung 10 an das Verstärkungselement 5 ergibt sich eine weitere Stabilisierung der erfindungsgemäßen Vorrichtung 10. Weiter ist die Unterseite des Ersatzteils 40 erkennbar, welche eine entsprechende Profilierung aufweist. Eine derartige Profilierung ist insbesondere bei der Verbindung des Ersatzteils mit dem Blech 20 bei einem Schweißverfahren bevorzugt. Darüber hinaus ist erkennbar, dass der Innenrahmen 2 mittels entsprechenden Verbindungselementen, in diesem Fall Schrauben und Schraubenmuttern, mit dem Außenrahmen 1 an dem Blech des Schienenfahrzeuges verbunden ist.

Die **Figur 2c** zeigt eine schematische Querschnittsseitenansicht der erfindungsgemäßen Vorrichtung 10, die auf dem Blech 20 angebracht ist. Dabei sind der entsprechende Außenrahmen 1, der Innenrahmen 2 sowie der äußere Konturrahmen 1b und der innere Konturrahmen 2b, darüber hinaus der äußere Grundrahmen 1a und der innere Grundrahmen 2a erkennbar. Ebenso ist im Querschnitt der Ersatzteil 40 dargestellt. An der Oberfläche des Außenrahmens sind Bohrungen 4 sowie zwei Verbindungselemente, in diesem Fall Schrauben 3 dargestellt.

Bei einem Anordnen der erfindungsgemäßen Vorrichtung, welche im vorliegenden Ausführungsbeispiel einen Außenrahmen 1 mit einer quadratische Form mit einem Durchmesser von 40 cm und ebenso einen baugleichen Innenrahmen 2 aufweist, wird der Außenrahmen auf die zu reparierende Stelle auf einem Blech 20 eines Schienenfahrzeugs aufgebracht.

Der Außenrahmen und der Innenrahmen sind aus Stahl oder Aluminium hergestellt.

Die zu reparierende Stelle weist dabei eine Größe von 100 cm2 auf. Die Fläche im Innenbereich des Außenrahmens und des Innenrahmens beträgt 900 cm².

Der äußere Konturrahmen 1b und der innere Konturrahmen 2b wurden in einem vorhergehenden Arbeitsschritt bereits an die Oberflächengeometrie des Blechs angepasst.

Der Außenrahmen wird dabei in einem ersten Schritt über den zu reparierenden Bereich des Blechs angeordnet und ausgerichtet.

In einem weiteren Schritt wird mit einem entsprechenden Bohrer durch bereits bestehende Bohrung 4 in den Ecken des Außenrahmens durch das Blech 20 gebohrt. Anschließend werden vier Verbindungselemente 3, in diesem Fall, verzinkte Schrauben, durch die Bohrungen des Außenrahmens sowie des Blechs geführt.

In einem weiteren Schritt führt ein Nutzer der erfindungsgemäßen Vorrichtung die Bohrungen des Innenrahmens durch die Verbindungselemente und verschraubt die Schrauben mit entsprechenden Muttern.

Nachdem der Außenrahmen und der Innenrahmen fest miteinander verschraubt wurden, wird in einem weiteren Schritt mittels einer Flex-Maschine und einem Handfräser der zu reparierende Teil 30 des Blechs herausgeschnitten und ein Ersatzteil 40 bei der Stelle 30 eingeschweißt.

Nachdem der Ersatzteil 40 fest in das Blech eingeschweißt wurde und der geschweißte und nachbearbeitete Bereich entsprechend fertig gestellt wurde, werden der Außenrahmen und der Innenrahmen in der umgekehrten Reihenfolge, wie zuvor beschrieben, voneinander entfernt. Durch den erfindungsgemäßen Reparaturvorgang bzw. das Verfahren ist es möglich, eine effektive und kostengünstige Reparatur an einem Schienenfahrzeug durchzuführen ohne aufwändige zusätzliche Vorrichtungen verwenden zu müssen und wobei sich der Vorteil ergibt, dass Verspannungen oder Verzerrungen auf dem zu reparierenden Blech auf ein Minimum reduziert werden.

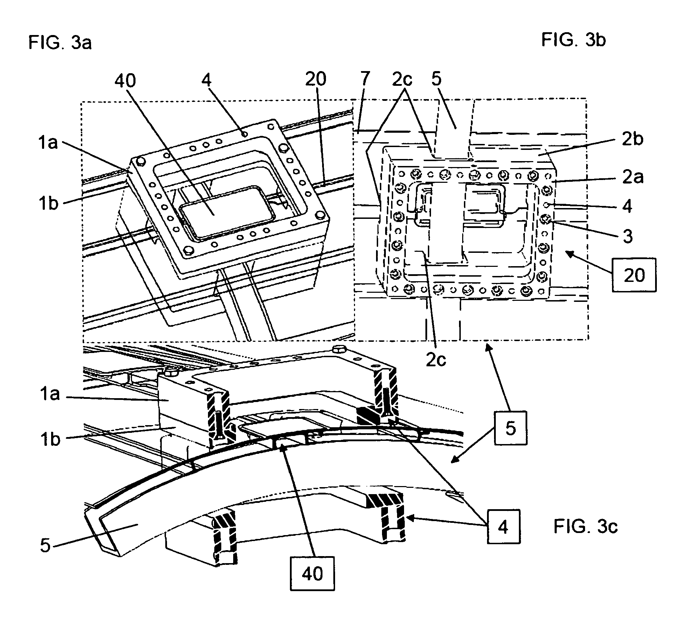

In den **Figuren 3a bis 3c** ist eine weitere bevorzugte Ausführungsform der vorliegenden Erfindung dargestellt. Wie bereits in Fig. 1 erläutert, sind auch in Fig. 3 eine Draufsicht auf die Oberfläche des Blechs mit der erfindungsgemäßen Vorrichtung 10, eine Draufsicht auf die innere Oberfläche des Blechs mit der erfindungsgemäßen Vorrichtung 10 und eine querschnittsschematische Seitenansicht der erfindungsgemäßen Vorrichtung erkennbar. Im Gegensatz zur Figur 1 ist jedoch in den Figuren 3a bis 3c ein zusätzliches Verstärkungselement 4 vorhanden, welches als Verstärkungselement bei dem Blech 20 des Schienenfahrzeugs dient, um für eine entsprechende Stabilisierung des Blechs des Schienenfahrzeugs zu sorgen. In dem vorliegenden Fall ist es notwendig, eine Reparatur in einem derartigen Bereich durchzuführen, wo eine Verstärkung des Blechs verläuft.

Es ist in **Figur 3b** erkennbar, dass der innere Konturrahmen 2b im oberen Teil und im unteren Teil Vertiefungen bzw. Ausnehmungen 2c aufweist, durch welche das Verstärkungselement 5 verlaufen kann. Somit ist es möglich, die erfindungsgemäße Vorrichtung direkt an der Oberfläche der Innenseite des Blechs des Schienenfahrzeugs anzubringen.

In **Figur 3c** ist noch eine schematische Seitenansicht mit dem Verstärkungselement 5 und der erfindungsgemäßen Anordnung der Vorrichtung dargestellt.

Weiter ergibt sich durch ein Auflegen des Außenrahmens 1 auf die Außenseite der Außenhaut 20 und des Innenrahmens 2 auf die Innenseite der Außenhaut 20, sowie Durchführen der Verbindungselemente durch die Bohrungen 4, wie bereits in Fig. 2a bis 2c beschrieben wurde, dass der äußere Konturrahmen 1b fest an der Außenhaut 20 und der innere Konturrahmen 2b fest an der Innenseite der Außenhaut 20 anliegt. Weiter ergibt sich bei Auflagen des Innenrahmens mit den Ausnehmungen 2c, dass der Innenrahmen nicht auf dem Verstärkungselement 5 aufliegt, womit es wiederum zu einem optimalen Aufliegen des konturkonformen inneren Konturrahmens 2b auf der Außenhaut bzw. dem Blech kommt. Weiter liegen die Ausnehmungen nicht auf der Führung 7 auf und verstärken dadurch den erfindungsgemäßen Effekt einer gleichförmigen verspannungsfreien Auflage der erfindungsgemäßen Vorrichtung 10.

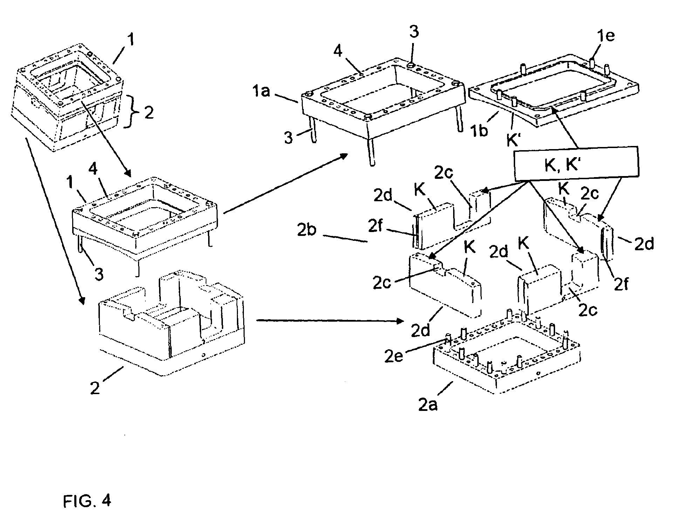

Abschließend wird in **Figur 4** die erfindungsgemäße Vorrichtung 10 in einer Explosionsdarstellung dargestellt, wobei sich der innere Konturrahmen 2b aus vier Konturteilen 2d zusammensetzt, welche entsprechende Ausnehmungen 2c aufweisen. Diese entsprechenden Ausnehmungen 2c ermöglichen es, wie bereits in den Figuren 3a bis 3c dargestellt wurde, dass der innere Konturrahmen direkt an einer Stelle auf die Innenseite des Blechs angebracht werden kann, wo ein Verstärkungselement 5 verläuft. Durch die einzelnen Konturteile 2d ergibt sich der Vorteil, dass der innere Konturrahmen individuell an die Geometrie des Innenblechs bzw. evtl. auftretende Verstärkungselemente 5 angepasst werden kann. Darüber hinaus die vier Konturteile 2d jeweils einen entsprechenden Konturbereich K auf, welcher der Oberflächengeometrie der Innenseite des Blechs 20 entspricht. Die einzelnen Konturbereiche K der einzelnen Konturteile 2d können dabei eine beliebige Ausformung aufweisen.

Ebenso ist in Fig. 4 erkennbar, dass auch der äußere Konturrahmen 1b einen Konturbereich K' aufweist, welcher der Oberflächengeometrie der Außenseite des Blechs 20 entspricht.

Weiter weisen die Konturteile 2d in ihren Randbereichen Führungen bzw. Vertiefungen 2f auf, die für eine stabile Zusammensetzung des inneren Konturrahmens 2b sorgen.

Bei Zusammensetzen der Konturteile 2d mit dem inneren Grundrahmen 2b, dem äußeren Grundrahmen 1a und dem äußeren Konturrahmen 1b treten die gleichen Effekte auf, wie sie bereits in Fig. 1 beschrieben wurden. Darüber ergibt sich ein verstärkender Effekt durch die konturkonformen Konturbereiche K und K', die die Außenhaut bzw. das Blech noch optimaler und besser einspannen.

Durch die jeweiligen Konturbereiche K und K', sowie der Ausnehmung 2c ist es möglich die Vorrichtung 10, die sich aus Innenrahmen 2 und Außenrahmen 1 zusammensetzt, mittels der Verbindungselemente 3 spannungsfrei auf dem Blech 20 aufzubringen, wodurch es zu keinen Verzerrungen des Blechs 20 kommt.

### Bezugszeichenliste

- 1: Außenrahmen
- 1a: äußerer Grundrahmen
- 1b: äußerer Konturrahmen
- 2: Innenrahmen
- 2a: innerer Grundrahmen
- 2b: innerer Konturrahmen
- 2c: Ausnehmung
- 2d: Konturteil
- 2e: Führungselement
- 2f: Führung bzw. Vertiefung

- 3: Verbindungselement
- 4: Bohrung
- 5: Verstärkungselement
- 6: Randbereich
- 7: Führung

- 10: Vorrichtung zur Reparatur

- 20: Blech

- 30: Teils des Blechs

- 40: Ersatzteil

- K: Konturbereich innerer Konturrahmen
- K': Konturbereich äußerer Konturrahmen

## Patentansprüche

1. Vorrichtung (10) zur Reparatur einer Außenhaut (20), insbesondere eines Blechs, umfassend:
einen Aussenrahmen (1),
einen Innenrahmen (2), und
mindestens ein Element (3) zum Verbinden des Aussenrahmens (1) mit dem Innenrahmen (2),
**dadurch gekennzeichnet, dass**
der Aussenrahmen (1) einen äußeren Grundrahmen (1a) und einen äußeren Konturrahmen (1b) umfasst ,
der Innenrahmen (2) einen inneren Grundrahmen (2a) und einen inneren Konturrahmen (2b) umfasst,
der Außenrahmen (1) und der Innenrahmen (2) eine Vielzahl von Bohrungen (4) aufweisen,
das mindestens eine Elemente (3) ist durch die Bohrungen (4) des Aussenrahmens (1), sowie durch die Bohrungen (4) des Innenrahmens (2) durchführbar,
wobei die Aussenhaut (20) zwischen Aussenrahmen (1) und Innenrahmen (2) spannungsfrei anordenbar ist.

2. Vorrichtung gemäß einem der vorhergehenden Ansprüche, wobei der äußere Konturrahmen (1b) und/oder der innere Konturrahmen (2b) konturkonform zu einer Form einer Außenhaut (20) sind.

3. Vorrichtung gemäß einem der vorhergehenden Ansprüche, wobei sich der innere Konturrahmen (2b) aus mindestens einem Konturteil (2d) zusammensetzt.

4. Vorrichtung gemäß einem der vorhergehenden Ansprüche, wobei der innere Konturrahmen (2b) mindestens eine Ausnehmung zum Aufnehmen eines Verstärkungselements (5) aufweist.

5. Vorrichtung gemäß einem der vorhergehenden Ansprüche, wobei das Verbindungselement mindestens eine Schraube und mindestens eine Schraubenmutter umfasst.

6. Vorrichtung gemäß einem der vorhergehenden Ansprüche, wobei der innere Grundrahmen (2a) und/oder der äußere Konturrahmen mindestens ein Führungselement (le, 2e) aufweisen.

7. Verfahren zum Reparieren einer Außenhaut, insbesondere eines Blechs mittels einer Vorrichtung gemäß einem der vorhergehenden Ansprüche, wobei das Verfahren die Schritte umfasst:
• Anbringen des Außenrahmens (1) an einer Außenseite (21) der Außenhaut (20),
• Anbringen des Innenrahmens (2) an einer Innenseite (22) der Außenhaut (20),
• Durchbohren der Außenhaut (20) an mindestens einer Bohrung (4) des Außenrahmens (1),
• Verbinden des Außenrahmens (1) und des Innenrahmens (2) mittels des mindestens einen Verbindungselements (3)
• Ausschneiden eines Teils (30) der Außenhaut (20), welcher durch die Vorrichtung (10) umgeben wird
• Ersetzen des Teils (30) mittels eines Ersatzteils (40), und
• Befestigen des Ersatzteils (40) auf der Außenhaut (20).

8. Verfahren gemäß dem vorhergehenden Anspruch, wobei das Verfahren weiter den Schritt umfasst:
• Anbringen eines Verstärkungselements (5) in einem Randbereich (6) der Vorrichtung (10).

9. Verfahren gemäß einem der vorhergehenden Ansprüche, wobei das Verfahren weiter den Schritt umfasst:
• Anbringen des inneren Konturrahmens (2b) über einer Führung (7).

10. Verfahren gemäß einem der vorhergehenden Ansprüche, wobei das Ausschneiden des Teils (30) mittels eines Vorgangs erfolgt, der aus der Gruppe stammt, die umfasst:
• Laserschneiden, Blechschneiden, Stanzen oder eine Kombination davon ist.

11. Verfahren gemäß einem der vorhergehenden Ansprüche, wobei das Befestigen des Ersatzteils (40) auf der Außenhaut (20) mittels eines Vorgangs erfolgt, der aus der Gruppe stammt, die umfasst: Schweißen, Kleben, Pressen, Stanzen, Verschrauben oder eine Kombination davon ist.

12. Verfahren gemäß einem der vorhergehenden Ansprüche, wobei die Außenhaut (20) in ein Fahrzeug, insbesondere ein Schienenfahrzeug, ein Schiff, ein Flugzeug, ein Landfahrzeug oder ein Raumfahrzeug, eingebaut ist.

## Claims

1. Device (10) for repairing a shell (20), in particular a metal sheet, comprising:
an outer frame (1),
an inner frame (2), and
at least one element (3) for connecting the outer frame (1) to the inner frame (2),
**characterized in that**
the outer frame (1) comprises an outer base frame (1a) and an outer contour frame (1b),
the inner frame (2) comprises an inner base frame (2a) and an inner contour frame (2b),
the outer frame (1) and the inner frame (2) have a plurality of bores (4),
the at least one element (3) can be guided through the bores (4) of the outer frame (1), and through the bores (4) of the inner frame (2),
wherein the shell (20) can be arranged stress-free between outer frame (1) and inner frame (2).

2. Device according to one of the previous claims,
wherein the outer contour frame (1b) and/or the inner contour frame (2b) correspond to the contour of a shape of a shell (20).

3. Device according to one of the previous claims,
wherein the inner contour frame (2b) is composed of at least one contour part (2d).

4. Device according to one of the previous claims,
wherein the inner contour frame (2b) has at least one recess for receiving a reinforcing element (5).

5. Device according to one of the previous claims,
wherein the connecting element comprises at least a screw and at least a nut.

6. Device according to one of the previous claims,
wherein the inner base frame (2a) and/or the outer contour frame have at least one guide element (le, 2e).

7. Method of repairing a shell, in particular a metal sheet by means of a device according to one of the previous claims, wherein the method comprises the steps:
• attaching the outer frame (1) to an outer side (21) of the shell (20),
• attaching the inner frame (2) to an inner side (22) of the shell (20),
• drilling through the shell (20) at at least one bore (4) of the outer frame (1),
• connecting the outer frame (1) and the inner frame (2) by means of the at least one connecting element (3),
• cutting out a part (30) of the shell (20) which is surrounded by the device (10),
• replacing the part (30) by means of a replacement part (40), and
• securing the replacement part (40) on the shell (20).

8. Method according to the previous claim, wherein the method further comprises the step:
• attaching a strengthening element (5) in an edge area (6) of the device (10).

9. Method according to one of the previous claims,
wherein the method further comprises the step:
• attaching the inner contour frame (2b) via a guide (7).

10. Method according to one of the previous claims,
wherein the cutting out of the part (30) takes place by means of a process which comes from the group which comprises:
• laser cutting, sheet cutting, punching or is a combination thereof.

11. Method according to one of the previous claims,
wherein the securing of the replacement part (40) on the shell (20) takes place by means of a process which comes from the group which comprises: welding, adhesion, pressing, stamping, screwing or is a combination thereof.

12. Method according to one of the previous claims,
wherein the shell (20) is fitted into a vehicle, in particular a rail vehicle, a ship, an aircraft, a land vehicle or a space vehicle.

## Revendications

1. Dispositif (10) destiné à la réparation d'un revêtement (20), notamment d'une tôle, comprenant :
un cadre extérieur (1), un cadre intérieur (2) ; et
au moins un élément (3) pour relier le cadre extérieur (1) au cadre intérieur (2) ;
**caractérisé en ce que** :
le cadre extérieur (1) comprend un cadre de base extérieur (1a) et un cadre de contour (1b) extérieur ;
le cadre intérieur (2) comprend un cadre de base intérieur (2a) et un cadre de contour intérieur (2b) ;
le cadre extérieur (1) et le cadre intérieur (2) comportent une pluralité d'alésages (4) ;
l'au moins un élément (3) peut être traversé par les alésages (4) du cadre extérieur (1) ainsi que par les alésages (4) du cadre intérieur (2) ;
le revêtement (20) pouvant être disposé sans tension entre le cadre extérieur (1) et le cadre intérieur (2).

2. Dispositif selon l'une quelconque des revendications précédentes, le cadre de contour (1b) extérieur et/ou le cadre de contour (2b) intérieur prenant la forme de contour du revêtement (20).

3. Dispositif selon l'une quelconque des revendications précédentes, le cadre de contour intérieur (2b) se composant d'au moins une partie de contour (2d).

4. Dispositif selon l'une quelconque des revendications précédentes, le cadre de contour intérieur (2b) comportant au moins un évidement pour loger un élément de renfort (5).

5. Dispositif selon l'une quelconque des revendications précédentes, l'élément de jonction comprenant au moins une vis et au moins un écrou.

6. Dispositif selon l'une quelconque des revendications précédentes, le cadre de base intérieur (2a) et/ou le cadre de contour extérieur comportant au moins un élément de guidage (le, 2e).

7. Procédé destiné à la réparation d'un revêtement, notamment d'une tôle, à l'aide d'un dispositif selon l'une quelconque des revendications précédentes, le procédé comprenant les étapes suivantes :
• mise en place du cadre extérieur (1) contre un côté extérieur (21) du revêtement (20) ;
• mise en place du cadre intérieur (2) contre un côté intérieur (22) du revêtement (20) ;
• perçage du revêtement (20) au niveau d'au moins un alésage (4) du cadre extérieur (1) ;
• jonction du cadre extérieur (1) et du cadre intérieur (2) à l'aide de l'au moins un élément de jonction (3) ;
• découpe d'une partie (30) du revêtement (20) entourée par le dispositif (10) ;
• remise en place de la partie (30) à l'aide d'une pièce de rechange (40) ; et
• fixation de la pièce de rechange (40) sur le revêtement (20).

8. Procédé selon la revendication précédente, le procédé comprenant en outre l'étape suivante :
• mise en place d'un élément de renfort (5) dans une zone de bordure (6) du dispositif (10).

9. Procédé selon l'une quelconque des revendications précédentes, le procédé comprenant en outre l'étape suivante :
• mise en place du cadre de contour intérieur (2b) par le biais d'un guide (7).

10. Procédé selon l'une quelconque des revendications précédentes, la découpe de la partie (30) se produisant à l'aide d'un processus faisant partie du groupe suivant :
• la découpe au laser, la découpe de tôle, le poinçonnage ou une combinaison de ceux-ci.

11. Procédé selon l'une quelconque des revendications précédentes, la fixation de la pièce de rechange (40) sur le revêtement (20) se produisant à l'aide d'un processus faisant partie du groupe suivant :
• le soudage, le collage, le pressage, le poinçonnage, le vissage ou une combinaison de ceux-ci.

12. Procédé selon l'une quelconque des revendications précédentes, le revêtement (20) étant intégré dans un véhicule, notamment un véhicule ferroviaire, un navire, un avion, un véhicule agricole ou un véhicule spatial.
